# EUROPEAN PATENT APPLICATION

(11) **EP 4 398 224 A1**
(43) Date of publication of application: **10.07.2024**
(21) Application number: 23150625.4
(22) Date of filing: 06.01.2023
(51) Int. Cl.: G09F 9/30, G09F 13/04, G09F 19/12, G09F 21/04

(54) **AN OPTICAL STRUCTURE COMPRISING A TEXTURED LAYER MADE OF INK**

(71) Applicant: DAV, 94000 Créteil (FR)
(72) Inventor: EL OUARDI, Nour Eddine, 94000 Créteil (FR); HEIM, Adrien, 94000 Créteil (FR); MARTINEZ GOTTSCHALK, Jose, 94000 Créteil (FR); HENTSCHEL, Joachim, 94000 Créteil (FR)
(74) Representative: Delplanque, Arnaud

(57) **Abstract**

The present invention relates to an optical structure (6) configured to be placed in front of an image emitting device (4) configured to emit an initial image adjusted by the optical structure (6) to form an adjusted image to an observer (8). Said optical structure (6) comprises:
- a textured layer (42) placed on an observer's side (8) of the optical structure (6); and
said textured layer (42) comprising at least a tactile pattern (42) perceptible to the touch by a human body part.

Said textured layer (10) made of ink and comprises:
o a plurality of discrete ink dots (11), each having dimensions below 100 µm, said discrete ink dots (11) forming all together said tactile pattern (42); and/or
o a plurality of discrete ink-free dots, each having dimensions below 100 µm, and the ink surrounding the discrete ink-free dots so as to form said tactile pattern (42).

## Description

The invention relates to an optical structure configured to be placed in front of an image emitting device configured to emit an initial image adjusted by the optical structure to form an adjusted image visible to an observer. The invention further relates to an image display system comprising such an optical structure. The invention also relates to a method of manufacturing such an optical structure.

WO 2021 200 344 A1 discloses an example of a display device having a decorative sheet including a design layer with micro-holes on which a design is printed with ink. The decorative sheet has a transparent sheet covering such design layer.

Vehicles are generally equipped with display systems which communicate to the driver various information such as speed and temperature data. Such a display system is integrated in a vehicle dashboard. Said dashboard may for instance comprise areas with a decorative layer with a wood vein appearance. There is a need to display images on such kind of areas.

The present invention aims to meet this need.

This aim is achieved by an optical structure configured to be placed in front of an image emitting device configured to emit an initial image adjusted by the optical structure to form an adjusted image to an observer, and said optical structure comprising:
- a textured layer placed on an observer's side of the optical structure; and
   said textured layer comprising at least a tactile pattern perceptible to the touch by a human body part, and
   said textured layer made of ink and comprising:
      o a plurality of discrete ink dots, each having dimensions below 100 µm, said discrete ink dots forming all together said tactile pattern; and/or
      o a plurality of discrete ink-free dots, each having dimensions below 100 µm, and the ink surrounding the discrete ink-free dots so as to form said tactile pattern.

By "dimension" is meant the distance between two points of a contour of the ink dots or ink-free dots.

The dimensions of ink-dots or ink-free dots are below 100 µm, preferably are ranging from 20 to 80 µm, preferably from 30 to 70 µm.

It is remarkable that the presence of the spacing between each discrete ink dot or discrete ink-free dots within said textured layer allows to improve the adjusted image sharpness by correcting the light scattering occurring at the textured layer, compared with the adjusted image formed by the light passing through the textured layer without any discrete ink dot or discrete ink-free dot.

In addition, this invention provides said textured layer comprising said tactile pattern that can be perceptible by the touch of a human body part, together with an adjusted image with an improved sharpness on this textured layer.

The ink surrounding the ink-free dots has an external continuous contour corresponding to the contour of said tactile pattern.

By "image" is meant any kind of images such as motion image, static image or successive series of images. This definition applies to both "initial image" and "adjusted image". The "image" is used to display, in a non-exhaustive manner, the following information: "GPS information", "Speed counter", "Temperature information", "Tachymeter", "Decorative information" etc.

According to an aspect of the invention, the optical structure further comprises a protective layer placed between the textured layer and the image emitting device, said protective layer is preferably a light transmitting protective layer.

The protective layer provides protection against scratches to increase the durability of the optical structure.

According to an aspect of the invention, the discrete ink-dots are present on a substrate.

According to an aspect of the invention, the discrete ink-free dots and the ink surrounding the discrete ink-free dots so as to form said tactile pattern on a substrate.

According to an aspect of the invention, the discrete ink-dots, and/or
the discrete ink-free dots and the ink surrounding the discrete ink-free dots so as to form said tactile pattern are present on a substrate.

According to an aspect of the invention, said substrate is formed by the protective layer.

According to an aspect of the invention, the textured layer and the protective layer have a substantially same chemical composition.

According to an aspect of the invention, the textured layer and the protective layer are made of ink, or made of varnish.

According to an aspect of the invention, the optical structure further comprises successively, from the observer's side to the image emitting device:
- a light transmitting interlayer, in particular made of a material selected from polymethyl methacrylate (PMMA), and other polymers having optical properties and hardness equivalent to those of PMMA; and
- a decorative layer.

The decorative layer allows the adjusted image to be correctly visible and readable by an observer despite the presence of the decoration.

According to an aspect of the invention, the decorative layer comprises a decoration formed by:
- visible patterns forming a decoration that is visible from the observer's side.

According to an aspect of the invention, the protective layer is configured to contribute to the decoration, for example, by modifying the appearance including color, opacity and glossy or matte finished aspect of the visible patterns of the decorative layer.

According to an aspect of the invention, the textured layer is configured to contribute to the decoration, for example, by modifying the appearance including color, opacity and glossy or matte finished aspect of the visible patterns of the decorative layer.

According to an aspect of the invention, the textured layer has a plurality of tactile patterns, the dimensions of which are selected so that said tactile patterns can be perceptible by the touch of a human body part.

According to an aspect of the invention, the tactile patterns are, for example, chosen among the following patterns:
- wood veins, hair lines, geometric tones, silk fabric, grippy texture, rubber texture.

According to an aspect of the invention, the height of each tactile pattern is superior to 5 µm.

According to an aspect of the invention, the width of each tactile pattern is ranging between 200 µm and 5 mm.

Accordingto an aspect of the invention, visible patterns have a shape of the following patterns:
- wood veins, hair lines, geometric tones, silk fabric, grippy texture, rubber texture.

According to an aspect of the invention, each tactile pattern has a region with a plurality of discrete ink dots and/or a plurality of discrete ink-free dots.

Said discrete ink-dots or discrete ink-free dots having the dimensions below 100 µm are not discernable by touch of a human body part. Therefore, the tactile sensations are only provided by the presence of one or a plurality of tactile patterns.

For example, when the tactile pattern imitates a cross-section of a wood, each tactile pattern corresponding to a wood vein has a region with a plurality of ink-dots or ink-free dots.

These ink-dots or ink-free dots are sufficiently small that the observer can only see an overall picture of the group, but not an individual discrete ink-dot or discrete ink-free dot.

According to an aspect of the invention, the tactile patterns of the textured layer overlap the visible patterns of the decorative layer.

For example, each tactile pattern in the textured layer corresponds to the visible pattern (i.e. wood vein, leather grain) in the decorative layer that has the appearance of the cross-section of a wood or the appearance of a genuine leather.

According to an aspect of the invention, the width of each visible pattern is ranging between 200 µm and 5 mm.

According to an aspect of the invention, the optical structure further comprises a light transmitting reinforcing layer placed between the decorative layer and the image emitting device.

According to an aspect of the invention, the light transmitting reinforcing layer is made of a material selected from polycarbonate (PC) and other polymers having mechanical properties and high temperature stability equivalent to those of PC.

According to an aspect of the invention, said optical structure is a multilayer structure.

According to an aspect of the invention, the decorative layer is semi-translucent or semi-transparent.

The semi-translucent or semi-translucent decorative layer allows the adjusted image to be correctly visible and readable by an observer despite the presence of the decoration.

By "transparent" is meant a material or a layer allowing light or image to pass through so that objects behind can be distinctly seen. In other words, the objects behind a "transparent" material or a "transparent" layer are clearly visible through said material or said layer.

By "opaque" is meant a material or a layer that is not clear enough to see through or allow light or image through. In other words, the term "opaque" is an opposite word to the term "transparent".

By "translucent" is meant a material or a layer that is almost transparent, allowing some light or image through a "translucent" material or "translucent" layer. In other words, the objects behind a "translucent" material or a "translucent" layer are visible in a blurred manner through said material or said layer.

By "semi-transparent" is meant a material or a layer which is less transparent than a "transparent" material or a "transparent" layer.

By "semi-translucent" is meant a material or a layer which is less translucent than a "translucent" material or a "translucent" layer.

According to an aspect of the invention, the light transmitting interlayer is transparent, semi-transparent or semi-translucent.

According to an aspect of the invention, the textured layer is opaque, semi-translucent or semi-transparent.

According to an aspect of the invention, the protective layer is opaque, semi-translucent or semi-transparent.

According to an aspect of the invention, the texturing layer and/or the decorative layer comprises ink.

According to an aspect of the invention, said textured layer comprises an opaque ink, a semi-translucent ink or a semi-transparent ink.

Said semi-transparent ink and said translucent ink partially filters the initial image from the image emitting device, whereas said opaque ink completely filters the initial image from the image emitting device.

For example, a "semi-transparent" ink can be used for the decorative layer when the image emitting device is displaying an image defined above.

For example, a "semi-translucent" ink with a slight light scattering property can be used when the image emitting device is a light emitting device such as a backlit symbol lighted by LEDs, said backlit symbol providing visibility in dark ambient light conditions. The slight scattering property of said semi-translucent ink allows for better light adjustment so that the light passing through the material or layer containing such ink becomes more homogenous. This prevents the light emitted by said backlit symbol from becoming too intense in certain areas, forming light "hot spots".

According to an aspect of the invention, the light transmittance of the optical structure is lower than 50%, preferably lower than 40%. The light transmittance is ranging between 15 and 35%.

Thanks to the enhanced light transmittance of the optical structure, for example, the decorative layer is clearly visible on the observer's side when the image emitting device is switched off.

When the image emitting device is switched on, the visible patterns of the decorative allow a partial transmission of the image from the image emitting device, making the decorative layer faintly visible, while the visible patterns of the decorative layer are clearly visible. When the light transmittance is too low, for example below 15 %, the visible patterns are not clearly visible from the observer's side. When the image emitting device is switched off, a very high transmittance of the optical structure will cause no visibility of the decorative pattern, but only the black display behind instead. Thus, the indicated ranges represent a good compromise between the visibility of said visible patterns from the observer's side and transmittance of light through the optical structure.

According to an aspect of the invention, said discrete ink dots or said discrete ink-free dots have at least one of the shapes selected from among the following shapes: circular shape, oval shape, elliptical shape, polygonal shape.

For example, when the discrete ink dots or said discrete ink-free dots have a circular shape, the largest dimension of the circular discrete ink dots or said discrete ink-free dots, i.e., the diameter of the circular shape, is below 100 µm.

For example, when the discrete ink dots or said discrete ink-free dots have an oval shape, the largest dimension of the oval discrete ink dots or said discrete ink-free dots, is below 100 µm.

According to an aspect of the invention, the surface of the textured layer is treated to have at least one of the following properties: antibacterial, hard-coated, anti-reflective, low-reflective, anti-glare coated, anti-fingerprint, and sparkling reductive.

According to an aspect of the invention, said discrete ink dots or said discrete ink-free dots varying:
- in dimensions; and/or
- in spacing between said discrete ink dots or said discrete ink-free dots;
such that a gradient-like effect is generated.

Thus, the dot spacing varying according to the variation of the dimensions of the discrete ink dots or the discrete ink-free dots such that a gradual visual effect could be obtained by a group of the discrete ink dots or of the discrete ink-free dots.

According to an aspect of the invention, said discrete ink dots or said discrete ink-free dots have:
- same dimensions; and/or
- same spacing between said discrete ink dots or said discrete ink-free dots;

The invention also relates to an image display system comprising:
- a display panel forming the image emitting device; and
- the optical structure according to the invention placed on the observer's side of the image display system.

According to an aspect of the invention, the image display system further comprises:
- a touch panel;
- at least one extruded plastic layer, such as a thermoplastic layer;
- at least one clear adhesive layer, such as optical clear adhesive (OCA) layer or optical clear resin (OCR) layer; and/or
- at least one support substrate made of a material such as polycarbonate (PC) or a glass.

The "support substrate" is an intermediate protection plate to protect the optical structure and the display panel from any mechanical stresses.

According to an aspect of the invention, the optical structure is on the support substrate.

According to an aspect of the invention, the image display system comprises successively, from the observer's side to the image emitting device:
- the optical structure according to the invention;
- the at least one support substrate between two clear adhesive layers; and
- the display panel forming the image emitting device.

According to an aspect of the invention, the image display system comprises successively, from the observer's side to the image emitting device:
- the optical structure according to the invention;
- the at least one support substrate between two clear adhesive layers;
- the touch panel on a clear adhesive layer; and
- the display panel forming the image emitting device.

According to an aspect of the invention, the image display system comprises successively, from the observer's side to the image emitting device:
- the optical structure according to the invention;
- the extruded plastic layer;
- the clear adhesive layer; and
- the display panel forming the image emitting device.

According to an aspect of the invention, the image display system comprises successively, from the observer's side to the image emitting device:
- the optical structure according to the invention;
- the extruded plastic layer;
- the touch panel between two clear adhesive layers; and
- the display panel forming the image emitting device.

According to an aspect of the invention, the thickness of the clear adhesive layer is less than 500 µm.

According to an aspect of the invention, the display panel is chosen among liquid crystal display panel, light-emitting diode panel, organic light-emitting diode panel, and quantum light-emitting diode panel.

The invention also relates to a vehicle dashboard comprising the optical structure according to the invention.

The invention also relates to a method of manufacturing an optical structure according to the invention, the method comprising the following steps of:
a) providing a textured layer placed on an observer's side; and
   said textured layer comprising at least a tactile pattern perceptible to the touch by a human body part, and
b) applying ink so as to form said textured layer comprising:
   o an ink layer comprising a plurality of discrete ink dots having dimensions below 100 µm, forming all together a tactile pattern; or
   o an ink layer comprising a plurality of discrete ink-free dots having dimensions below 100 µm, said ink layer forming a tactile pattern.

According to an aspect of the invention, the method further comprises the following step prior to the applying ink so as to form said textured layer:
- assembling said textured layer with:
   o a protective layer, in particular a light-transmitting protective layer;
   o a light transmitting interlayer; and
   o a decorative layer.

According to an aspect of the invention, the method comprises the step of:
- laminating the optical structure on a support substrate using a clear adhesive layer between the optical structure and the support substrate.

According to an aspect of the invention, the method further comprises the step of:
- overmolding, in particular using in-mold labelling, the optical structure according to the invention in said optical display device.

According to an aspect of the invention, the method further comprises the step of:
- placing the optical structure in a mold that has the shape of the optical display device; and
- back-injecting a thermoplastic resin into the mold.

According to an aspect of the invention, the step b) is done with a technique chosen among the following techniques: gravure printing such as etched roll technique, digital printing, silk screen printing.

The dimensions, in particular the thickness of each tactile pattern can be precisely controlled, for example using these printing techniques.

In particular, the etched roll technique using a roller fitted with a plurality of micropins having a predetermined length arranged to coat the ink on the protective layer.

Further advantages, features and details of the invention will be apparent from the following description of a preferred example embodiment and with the aid of the drawings, showing in:
- Figure 1 is a cross-sectional view of an image display system comprising an embodiment of the optical structure according to the invention,
- Figure 2 shows a top view of an initial image emitted by an image emitting device, the initial image being seen just above said image emitting device,
- Figure 3 shows a top view of an adjusted image seen from an observer's side,
- Figure 4 shows a schematic and enlarged view of a plurality of discrete ink dots forming a tactile pattern,
- Figure 5 shows a schematic and enlarged view of a plurality of discrete ink-free dots and the ink surrounding the discrete ink-free dots so as to form a tactile pattern,
- Figure 6 illustrates a cross-sectional and partial view of an image display system of the embodiment of figure 1, illustrating the tactile pattern in the textured layer and a visible pattern in a decorative layer,
- Figure 7 shows a cross-sectional view of a first embodiment of an image display system assembled by lamination,
- Figure 8 shows a cross-sectional view of a second embodiment of an image display system assembled by lamination,
- Figure 9 shows a cross-sectional view of a first embodiment of an image display system assembled by overmolding,
- Figure 10 shows a cross-sectional view of a second embodiment of an image display system assembled by overmolding.

Identical components or respectively components with the same function are provided with the same reference numbers in the figures.

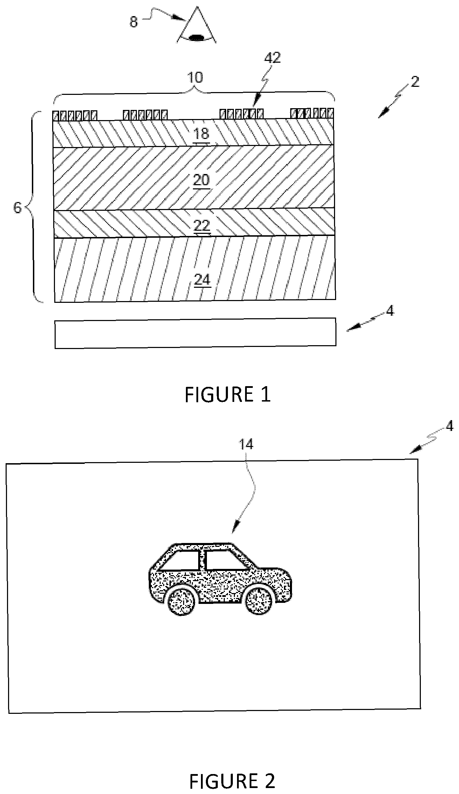

Referring to figures 1 and 7 to 10, an image display system 2 according to the invention comprises:
- a display panel 4 forming an image emitting device 4; and
- an optical structure 6 placed on the observer's side 8 of the image display system 2. Said optical structure 6 comprises:
- a textured layer 10 placed on an observer's side 8 of the optical structure 6; and said textured layer 10 comprising a plurality of tactile patterns 42 perceptible to the touch by a human body part.

The optical structure 6 further comprises successively, from the observer's side 8 to the display panel 4 forming the image emitting device 4:
- a light transmitting protective layer 18;
- a light transmitting interlayer 20 made of polymethyl methacrylate (PMMA); and
- a decorative layer 22;
- a light transmitting reinforcing layer 24 made of polycarbonate (PC) placed between the decorative layer 22 and the image emitting device 4.

Therefore, said optical structure 6 is a multilayer structure.

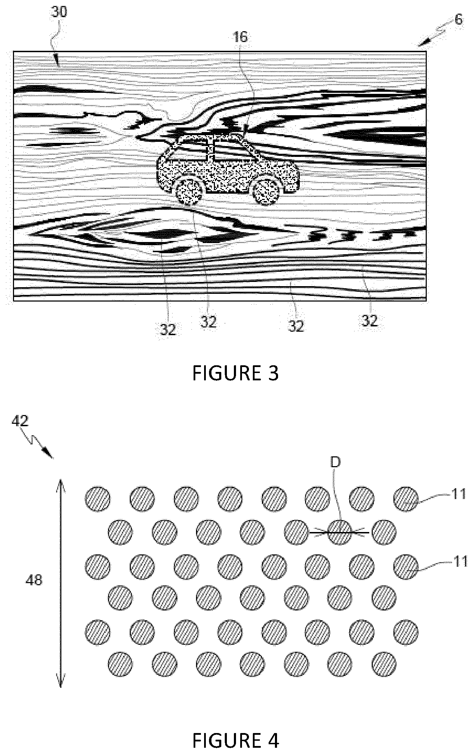

Referring to a first embodiment of the invention as illustrated in figure 4, said textured layer 10 is made of a semi-transparent ink 26 and comprises:
- a plurality of discrete ink dots 11, each having dimensions D below 100 µm, said discrete ink dots 11 forming all together said tactile pattern 42.

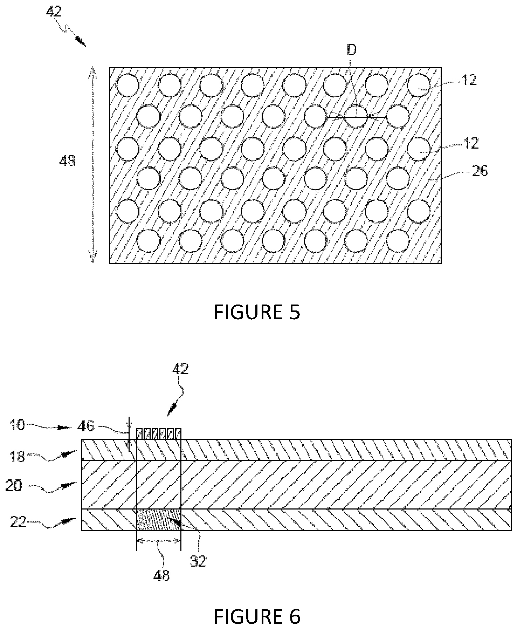

The discrete ink-dots are present on the light transmitting protective layer 18. Referring to a second embodiment of the invention as illustrated in figure 5, said textured layer 10 is made of said semi-transparent ink 26 and comprises:
- a plurality of discrete ink-free dots 12, each having dimensions D below 100 µm, and the semi-transparent ink 26 surrounding the discrete ink-free dots 120 so as to form said tactile patterns 42.

The discrete ink-free dots are present on the light transmitting protective layer 18. Referring to a third embodiment of the invention combining the first and second embodiment of the invention, said textured layer 10 is made of a semi-transparent ink 26 and comprises:
- a plurality of discrete ink dots 11, each having dimensions D below 100 µm, said discrete ink dots 11 forming all together said tactile pattern 42, and/or
- a plurality of discrete ink-free dots 12, each having dimensions D below 100 µm, and the semi-transparent ink 26 surrounding the discrete ink-free dots 120 so as to form said tactile patterns 42.

In this case, the discrete ink-dots 11 and the discrete ink-free dots 12 are both present on the light transmitting protective layer 18.

This third embodiment comprising both a plurality of discrete ink dots 11 and discrete ink-free dots 12 can be applied for all types of optical structure 6 of the invention. That is, the textured layer 10 of the optical structure 6 of the invention can comprise both a plurality of discrete ink dots 11 and a plurality of discrete ink-free dots 12, in a same tactile pattern 42 or in different tactile patterns 42.

The coating of the discrete ink-dots 11 or ink-free dots 12 surrounded by the semi-transparent ink 26 on the light transmitting protective layer 18 can be done with the following techniques: gravure printing such as etched roll technique, digital printing, silk screen printing.

The dimensions, in particular the thickness of each tactile pattern 42 can be precisely controlled using these printing techniques.

In particular, the etched roll technique using a roller fitted with a plurality of micropins having a predetermined length arranged to coat the semi-transparent ink 26 on the light transmitting protective layer 18.

Referring to figures 1 to 4 and 7 to 10, the optical structure 6 is placed in front of the display panel 4 forming the image emitting device 4 configured to emit an initial image 14 adjusted by the optical structure 10 to form an adjusted image 16 visible to an observer 8.

It is remarkable that the presence of the spacing between each discrete ink dot 11 or discrete ink-free dots 12 within said textured layer 10 allows to improve the adjusted image 16 sharpness by correcting the light scattering occurring at the textured layer 10, compared with the adjusted image 16 formed by the light passing through the textured layer without any discrete ink dot 11 or discrete ink-free dot 12.

In addition, this invention provides said textured layer 10 comprising said tactile pattern 42 that can be perceptible by the touch of a human body part, together with an adjusted image 16 with an improved sharpness on this textured layer 10.

The semi-transparent ink 26 surrounding the ink-free dots 12 has an external continuous contour 27 corresponding to the contour of said tactile pattern 42.

Furthermore, this invention provides a textured layer 10 that can be perceptible by the touch of a human body part, together with an adjusted image 16 with an improved sharpness on this textured layer 10.

The light transmitting protective layer 24 provides protection against scratches to increase the durability of the optical structure 6.

The textured layer 10 and the light transmitting protective layer 18 have a same chemical composition.

The textured layer 10 and the light transmitting protective layer 18 are made of semi-transparent ink 26.

Referring to figure 3, the optical structure 6 comprises the decorative layer 22 comprising a decoration 30 formed by visible patterns 32 having a shape of wood veins forming a decoration 30 that is visible from the observer's side 8.

The textured layer 10 and the light transmitting protective layer 18 also contributes to the decoration 30 by modifying the color and the opacity of the wood veins 32 of the decorative layer 22.

As illustrated on figures 1 to 2, and 7 to 10, the textured layer 10 has a plurality of tactile patterns 42, the dimensions 46, 48 of which are selected so that said tactile patterns 42 can be perceptible by the touch of a human body part. That is, the height 46 of each tactile pattern is superior to 5 µm. The width 48 of each tactile pattern is ranging between 200 µm and 5 mm.

Referring to figures 4 and 5, said discrete ink-dots 11 or discrete ink-free dots 12 having the dimensions D below 100 µm are not discernable by touch of a human body part. Therefore, the tactile sensations are only provided by the presence of one or a plurality of tactile patterns 42.

For example, when the tactile pattern 42 imitates a cross-section of a wood, each tactile pattern 42 corresponding to a wood vein 32 has a region with a plurality of the discrete ink-dots 11 or the discrete ink-free dots 12.

When the discrete ink-dots 11 or discrete ink-free dots 12 are arranged in a group, an observer 8 cannot distinguish one discrete ink-dot 11 from another discrete ink-dot 12 (or one discrete ink-free dot 12 from another discrete ink-free dot 12).

These ink-dots 11 or ink-free dots 12 are sufficiently small that the observer 8 can only see an overall picture of the group, but not an individual discrete ink-dot 11 or discrete ink-free dot 12.

Referring always to figures 4 and 5, said discrete ink-dots 11 or discrete ink-free dots 12 in the tactile pattern 42 have a circular shape. The diameter D of the circular discrete ink-dots or ink-free dots 12 is below 100 µm.

Figure 6 illustrates a cross-sectional and partial view of an image display system 2 of the embodiment of figure 1, illustrating a tactile pattern 42 in the textured layer 10 and a visible pattern 32 in the decorative layer 22. In the example of figure 6, only one tactile pattern 42 is illustrated for representation purposes although the textured layer 10 has a plurality of tactile patterns 42 and the decorative layer 22 has a plurality of visible patterns 32, as illustrated in figures 1 to 2, 4 and 7 to 10.

Referring to figures 4 and 6, the width of each visible pattern 32 is also ranging between 200 µm and 5 mm. With reference to the example in figure 6 which applies to all embodiments of the invention, the tactile patterns 42 of the textured layer 10 overlap the visible patterns 32 (or wood veins 32) of the decorative layer 22. Each tactile pattern 42 in the textured layer 10 corresponds to the wood vein 32 in the decorative layer that has the appearance of the cross-section of a wood. Therefore, the visible 32 and tactile patterns 42 have both a shape of wood veins 32.

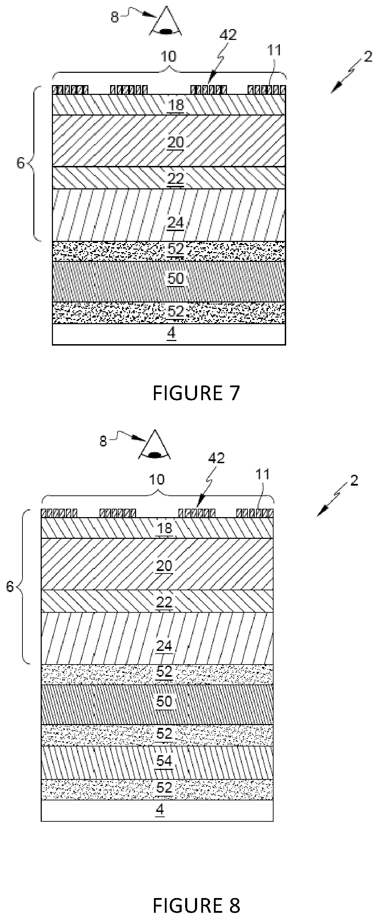

The embodiments of figures 7 and 8 represent the image display systems 2 assembled with lamination.

According to the particular embodiment of figure 7, the image display system 2 comprises successively, from the observer's side 8 to the display panel 4:
- the optical structure 6;
- a support substrate made of glass 50 between two optical clear adhesive (OCA) layers 52; and
- a display panel 4 forming the image emitting device 4.

The "support substrate" 50 is an intermediate protection plate to protect the optical structure 6 and the display panel 4 from any mechanical stresses.

According to the particular embodiment of figure 8, the image display system 2 comprises successively, from the observer's side 8 to the display panel 4:
- the optical structure 6;
- the support substrate made of PC 50 between two OCA layers 52;
- a touch panel 54 on an OCA layer 52; and
- a display panel 4 forming the image emitting device 4.

In this example in figure 8, the support substrate 50 can be also made of glass.

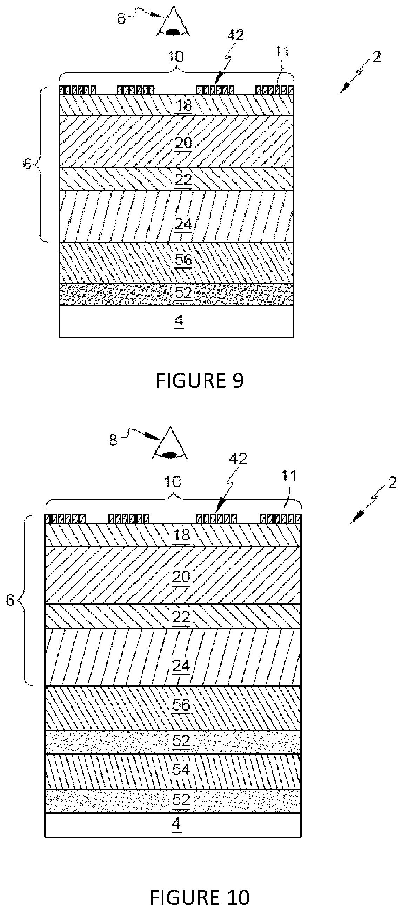

The embodiments of figures 9 and 10 represent the image display systems 2 assembled with in-mold labelling.

According to the particular embodiment of figure 9, the image display system comprises successively, from the observer's side to the image emitting device:
- the optical structure 6;
- a thermoplastic layer 56;
- an OCA layer 52; and
- a display panel 4 forming the image emitting device 4.

According to the particular embodiment of figure 10, the image display system 2 comprises successively, from the observer's side 8 to the image emitting device 2:
- the optical structure 6;
- a thermoplastic layer 56;
- a touch panel 54 between two OCA layers 52; and
- a display panel 4 forming the image emitting device 4.

The invention also relates to a vehicle dashboard (not-represented) comprising the optical structure 6. The optical structure 6 can be integrated to a vehicle dashboard so that a user can touch and interact with the textured layer 10. The optical structure 6 can be used to display any kind of adjusted images 16 issued from initial images 14 such as motion image, static image or successive series of images. The "image" is used to display, in a non-exhaustive manner, the following information: "GPS information", "Speed counter", "Temperature information", "Tachymeter", "Decorative information" etc.

The display panel 4 can be chosen among liquid crystal display panel, light-emitting diode panel, organic light-emitting diode panel, and quantum light-emitting diode panel.

For all the embodiments of the invention, the light transmittance of the optical structure 6 is ranging between 15 and 35% and the thickness of the OCA layer 52 is less than 500 µm.

The here-above embodiments are illustrative and not restrictive embodiments. Obviously, many modifications and variations of the present invention are possible in the light of the above teachings without deviating from its inventive concept. It has therefore to be understood that the invention may be practiced otherwise that as specifically described.

## Claims

1. An optical structure (6) configured to be placed in front of an image emitting device (4) configured to emit an initial image (14) adjusted by the optical structure (6) to form an adjusted image (16) to an observer (8), and said optical structure (6) comprising:
- a textured layer (10) placed on an observer's side (8) of the optical structure (6); and
said textured layer (10) comprising at least a tactile pattern (42) perceptible to the touch by a human body part, and
said textured layer (10) made of ink (26) and comprising:
o a plurality of discrete ink dots (11), each having dimensions (D) below 100 µm, said discrete ink dots (11) forming all together said tactile pattern (42); and/or
o a plurality of discrete ink-free dots (12), each having dimensions below 100 µm, and the ink (26) surrounding the discrete ink-free dots (12) so as to form said tactile pattern (42).

2. The optical structure (6) according to claim 1, further comprising:
- a protective layer (18) placed between the textured layer (10) and the image emitting device (4), said protective layer (18) is preferably a light transmitting protective layer (18).

3. The optical structure (6) according to claim 2, further comprising successively, from the observer's side (8) to the image emitting device (4):
- a light transmitting interlayer (20), in particular made of a material selected from polymethyl methacrylate (PMMA), and other polymers having optical properties and hardness equivalent to those of PMMA; and
- a decorative layer (22).

4. The optical structure (6) according to claim 3, further comprising a light transmitting reinforcing layer (24) placed between the decorative layer (22) and the image emitting device (4).

5. The optical structure (6) according to any one of the claims 1 to 4, wherein the discrete ink-dots, and/or the discrete ink-free dots and the ink surrounding the discrete ink-free dots so as to form said tactile pattern are present on a substrate.

6. The optical structure (6) according to claim 2 and 5, wherein said substrate is the protective layer (18).

7. The optical structure (6) according to any one of the claims 3 to 6, wherein the decorative layer (22) comprises a decoration (30) formed by:
- visible patterns (32) forming a decoration (30) that is visible from the observer's side (8).

8. The optical structure (6) according to claim 7, wherein the visible patterns (32) are, for example, chosen among the following patterns:
- wood veins, hair lines, geometric tones, silk fabric, grippy texture, rubber texture

9. The optical structure (6) according to any one of the preceding claims, wherein the light transmittance of the optical structure is lower than 50%, preferably lower than 40%. The light transmittance is ranging between 15 and 35%.

10. An image display system (2) comprising:
- a display panel (4) forming the image emitting device (4); and
- the optical structure (6) according to any one of the claims 1 to 9 placed on the observer's side (8) of the image display system (2).

11. The image display system (2) according to claim 10, further comprising: ;
- a touch panel (54);
- at least one extruded plastic layer (56), such as a thermoplastic layer;
- at least one layer of clear adhesive layer (52), such as optical clear adhesive (OCA) layer or optical clear resin (OCR) layer; and/or
- at least one support substrate (50) made of a material such as polycarbonate (PC) or a glass.

12. A vehicle dashboard comprising the optical structure (6) according to any one of the claims 1 to 10.

13. A method of manufacturing an optical structure, the method comprising the following steps of:
a) providing a textured layer (10) placed on an observer's side (8); and
said textured layer (10) comprising at least a tactile pattern (42) perceptible to the touch by a human body part, and
b) applying ink (26) so as to form said textured layer (10) comprising:
o an ink layer comprising a plurality of discrete ink dots (11) having dimensions (D) below 100 µm, forming all together a tactile pattern (42); or
o an ink layer comprising a plurality of discrete ink-free dots (11) having dimensions below 100 µlm, said ink layer forming a tactile pattern (42).
